# EUROPEAN PATENT SPECIFICATION

(11) **EP 4 564 116 B1**
(45) Date of publication and mention of the grant of the patent: **19.08.2026**
(21) Application number: 24211069.0
(22) Date of filing: 06.11.2024
(51) Int. Cl.: G05D 1/225, G05D 1/43, G05D 1/689, G05D 105/80, G05D 107/13, G05D 107/00, G05D 109/25

(54) **INFORMATION PROCESSING APPARATUS AND SYSTEM, CONTROL METHOD, PROGRAM PRODUCT, AND STORAGE MEDIUM**
INFORMATIONSVERARBEITUNGSVORRICHTUNG UND -SYSTEM, STEUERVERFAHREN, PROGRAMMPRODUKT UND SPEICHERMEDIUM
APPAREIL ET SYSTÈME DE TRAITEMENT D'INFORMATIONS, PROCÉDÉ DE COMMANDE, PRODUIT DE PROGRAMME ET SUPPORT DE STOCKAGE

(30) Priority: 28.11.2023 JP 2023200674
(43) Date of publication of application: 04.06.2025
(73) Proprietor: CANON KABUSHIKI KAISHA, Tokyo 146-8501 (JP)
(72) Inventor: KOBAYASHI, Satoru, Tokyo, 146-8501 (JP)
(74) Representative: TBK

(56) References cited:
- US-A1- 2017 220 041
- US-A1- 2021 218 935
- US-A1- 2022 185 472
- US-B2- 11 341 857

## Description

### BACKGROUND OF THE INVENTION

### Field of the Invention

The present invention relates to an information processing apparatus, an information processing system, a control method, and a computer program product.

### Description of the Related Art

Conventionally, there is a known method in which a mobile image capturing apparatus, such as a flying object equipped with an image capturing apparatus, automatically performs image capturing while flying along a predetermined flight route (for example, see Japanese Laid-Open Patent Publication No. 2021-12721). In addition, a method is also known in which such a mobile image capturing apparatus captures an image of an object that moves freely and analyzes a captured image to perform tracking image capturing (for example, see Japanese Laid-Open Patent Publication No. 2018-78371 (Counterpart of US 20180131856 A1)).

However, the conventional method described in JP 2021-12721A that performs the image capturing while flying along the predetermined flight route has a problem that it is difficult for the mobile image capturing apparatus to capture the object that freely moves around at a desired field angle.

In addition, the conventional method described in JP 2018-78371A that tracks and captures images of the object that moves freely by analyzing the image of the object has a problem in that the tracking of the object by the mobile image capturing apparatus is delayed and the image capturing cannot be performed at a desired field angle because it takes time to analyze the captured image. On the other hand, in order to solve this problem, when the movement of the object is predetermined to some extent and the mobile image capturing apparatus performs the image capturing in accordance with the predetermined movement of the object, a problem arises in that a degree of freedom of image capturing is reduced.
US 2021/218935 A1 discloses a controller of a drone which includes a storage unit that stores a scene information database containing a plurality of scene information sets arranged in time series of a video, wherein in each of the scene information sets, a relative position with respect to a vehicle in capturing a scene of the video and a duration of the scene are associated with each other, a vehicle information acquisition unit that receives vehicle information from the vehicle, a traveling position estimation unit that estimates a future traveling position of the vehicle based on the vehicle information, and a flight path calculation unit that, based on the estimated traveling position and the scene information database, calculates, for each of the scenes, a flight path that passes through the relative position with respect to the vehicle.

### SUMMARY OF THE INVENTION

The present invention provides an information processing system, an information processing apparatus, a control method therefor, and a computer program product, which enable a mobile image capturing apparatus to perform image capturing while immediately responding to a state of an object moving around freely and improve a degree of freedom of the image capturing.

The invention is set out in the appended set of claims.

According to the present invention, it is possible to perform the image capturing by the mobile image capturing apparatus while immediately responding to the state of the object that moves freely, and it is possible to improve the degree of freedom of the image capturing.

Further features of the present invention will become apparent from the following description of exemplary embodiments with reference to the attached drawings.

### BRIEF DESCRIPTION OF THE DRAWINGS

FIG. 1 is a block diagram showing hardware configuration examples of a mobile image capturing apparatus including a controller as an information processing apparatus according to an embodiment of the present invention, and a mobile object as an image capturing target of the mobile image capturing apparatus.
FIG. 2 is a flowchart showing an operation process of the mobile image capturing apparatus.
FIG. 3 is a flowchart showing an operation process of the mobile object.
FIG. 4 is a view showing an image capturing scenario list.
FIG. 5 is a view showing positional relationships between the mobile image capturing apparatus that operates along with an image capturing scenario and the mobile object.

### DESCRIPTION OF THE EMBODIMENTS

In this embodiment, a location, an orientation, and an image capturing condition of a mobile image capturing apparatus are changed according to steering instruction information of a mobile object with steering, and thereby a moving image desired by a user is captured. In this embodiment, an example in which the mobile image capturing apparatus moves by flying in air by using propellers will be described, but the moving method is not limited thereto. For example, the mobile image capturing apparatus may move on the ground by using wheels or may move in water by using a screw.

Hereinafter, the mobile image capturing apparatus 100 including a controller 111 as an information processing apparatus according to the embodiment of the present invention and a mobile object 150 that is an image capturing target of the mobile image capturing apparatus 100 and is wirelessly connected to the mobile image capturing apparatus 100 to be communicable will be described in detail with reference to the accompanying drawings.

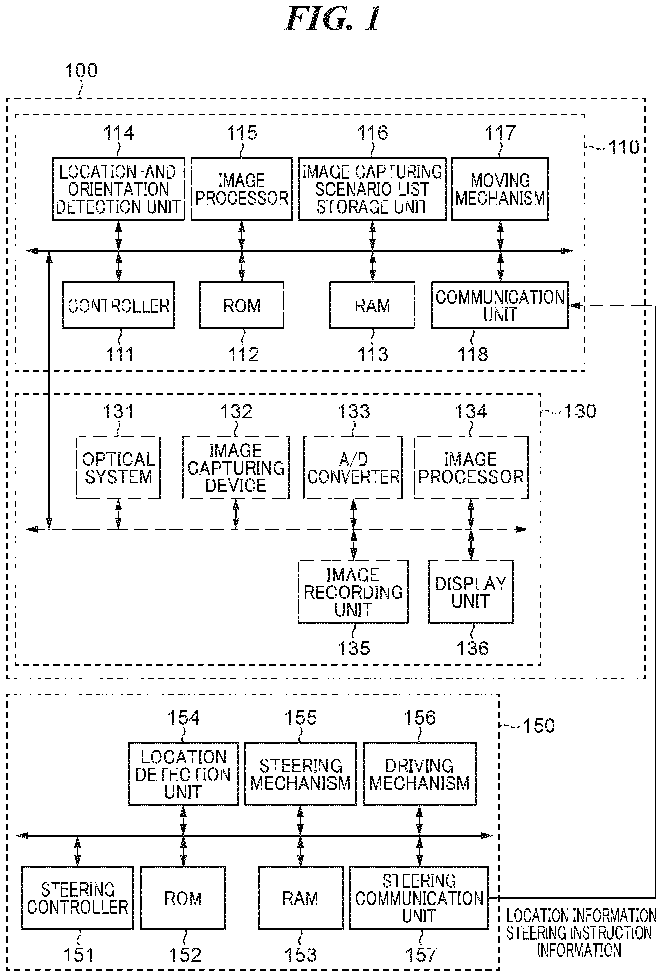

FIG. 1 is a block diagram showing hardware configuration examples of the mobile image capturing apparatus 100 and the mobile object 150.

As shown in FIG. 1, the mobile image capturing apparatus 100 is configured by an image capturing apparatus 130 and a moving apparatus 110 on which the image capturing apparatus 100 is mounted, which are communicably connected to each other. Further, the mobile object 150 is an object of a moving image captured by the image capturing apparatus 130, and moves in response to a steering instruction.

First, a configuration example of the moving apparatus 110 included in the mobile image capturing apparatus 100 will be described with reference to FIG. 1.

The moving apparatus 110 includes a controller 111, a ROM 112, a RAM 113, a location-and-orientation detection unit 114, an image processor 115, an image capturing scenario list storage unit 116, a moving mechanism 117, and a communication unit 118. These blocks are communicably connected to each other via a bus.

The controller 111 (an image capturing control unit) is a CPU, for example, reads control programs for the blocks in the moving apparatus 110 and blocks in the image capturing apparatus 130 described later from the ROM 112 and develops the control programs onto the RAM 113 and runs them. Thus, the controller 111 controls the operations of the respective blocks in the mobile image capturing apparatus 100. Also, the controller 111 (a steering instruction information obtaining unit and a location information obtaining unit) receives steering instruction information and location information from the mobile object 150 via the communication unit 118.

The ROM 112 is an electrically erasable and recordable nonvolatile memory and stores parameters necessary for operations of the respective blocks in the mobile image capturing apparatus 100 in addition to operation programs for the respective blocks.

The RAM 113 is a rewritable volatile memory and is used for development of a program executed by the controller 111 and for temporary storage of data generated by the operations of the blocks in the mobile image capturing apparatus 100.

The location-and-orientation detection unit 114 includes a plurality of sensors that detect various pieces of information necessary for location-and-orientation control of the moving apparatus 110 and outputs the detected location-and-orientation information to the controller 111. Examples of the sensors include a GPS sensor for detecting a location, a gyrosensor for detecting an angular velocity, an acceleration sensor for detecting speed change, a magnetic sensor for detecting a point of the compass, an atmospheric pressure sensor for detecting an altitude, and an ultrasonic sensor for detecting a distance to a surrounding object such as an object to be captured. The controller 111 (a location-and-orientation control unit) performs a calculation according to the information detected by the location-and-orientation detection unit 114 and controls the location and orientation of the moving apparatus 110.

The image processor 115 performs various image processes related to the location and orientation of the moving apparatus 110 by analyzing the image captured by the image capturing apparatus 130 and the information detected by the location-and-orientation detection unit 114. For example, the image processor 115 performs the image process for recognizing the object (for example, the mobile object 150) included in the video captured by the image capturing apparatus 130, and the controller 111 controls the moving mechanism unit 117 to track the object using the recognition result. A known method is used to recognize and track the object, and a detailed description thereof will be omitted.

The image capturing scenario list storage unit 116 (an image capturing scenario list obtaining and holding unit) records (holds) an image capturing scenario list received (obtained) from an external information processing apparatus (not shown) via the communication unit 118. An image capturing scenario list may be recorded in the image capturing scenario list storage unit 116 in advance at the time of the initial setting.

The moving mechanism unit 117 is configured by a lifting force generation mechanism including motors and propellers. The controller 111 controls the location and orientation of the moving apparatus 110 by driving the moving mechanism 117 in accordance with the information detected by the location-and-orientation detection unit 114 and the recognition result of the object by the image processor 115. This enables tracking image capturing to control the field angle so that the object (mobile object 150) will be included in a viewing field area captured by the image capturing apparatus 130.

The communication unit 118 communicates with the mobile object 150 based on a communication scheme defined by a standard, for example, a wireless LAN.

Next, the configuration example of the image capturing apparatus 130 included in the mobile image capturing apparatus 100 will be described with reference to FIG. 1.

The image capturing apparatus 130 includes an optical system 131, an image capturing device 132, an A/D converter 133, an image processor 134, an image recording unit 135, and a display unit 136. These blocks are communicably connected to each other via a bus.

The optical system 131 is configured by a diaphragm mechanism and lens groups including a zoom lens group and a focus lens group, and forms an object image on an image capturing surface of the image capturing device 132.

The image capturing device 132 is, for example, an image sensor such as a CCD sensor or a CMOS sensor, and photoelectrically converts an optical image formed on the image capturing surface of the image capturing device 132 by the optical system 131 and outputs an obtained analog image signal to the A/D converter 133.

The A/D converter 133 converts the input analog image signal into digital image data and outputs the digital image data. The digital image data output from the A/D converter 133 is temporarily stored in the RAM 113 included in the moving apparatus 110.

The image processor 134 applies various image processes to the digital image data stored in the RAM 113. Specifically, the image processor 134 applies the various image processes, such as a demosaicing process, a noise reduction process, a white balance correction process, and a gamma correction process, for developing, displaying, and recording the digital image data. The image processes include a process of generating video data from the digital image data stored in the RAM 113 in time series.

The image recording unit 135 records the data including the video data generated by the image processor 134 into a built-in recording medium.

The display unit 136 includes a display panel such as an LCD panel, and displays the digital image data stored in the RAM 113 and the video data recorded in the image recording unit 135 on the display panel.

Next, the configuration example of the mobile object 150 will be described with reference to FIG. 1. In this embodiment, the mobile image capturing apparatus 100 captures an image of the mobile object 150 as the object. Although the mobile object 150 is an automobile in this embodiment, the mobile object 150 is not limited thereto. For example, the mobile object 150 may be an object, such as a motorcycle, a ship, an airplane, or a train, that is controlled by an occupant to move. The mobile object 150 may be a device that is not steered by an occupant and is automatically steered while recognizing a surrounding situation. The mobile object 150 may be a device like a radio-controlled car that is not steered by an occupant but is controlled by remote control. The automatic operation and the remote operation are performed by known methods, and detailed descriptions thereof are omitted.

The mobile object 150 includes a steering controller 151, a ROM 152, a RAM 153, a location detection unit 154, a steering mechanism 155, a driving mechanism 156, and a steering communication unit 157. These blocks are communicably connected to each other via a bus.

The steering controller 151 is a CPU, for example, reads control programs for the respective blocks in the mobile object 150 from the ROM 152, develops the control programs onto the RAM 153, and executes them. Thus, the steering controller 151 controls operations of the respective blocks in the mobile object 150. The steering controller 151 also sends steering instruction information and location information to the moving apparatus 110 via the steering communication unit 157. The steering instruction information and the location information will be described later.

The ROM152 is an electrically erasable and recordable nonvolatile memory and stores parameters necessary for operations of the respective blocks in addition to operation programs for the respective blocks in the mobile object 150.

The RAM 153 is a rewritable volatile memory and is used for development of a program executed by the steering controller 151 and for temporary storage of data generated by the operations of the blocks in the mobile object 150.

The location detection unit 154 includes a plurality of sensors for obtaining a three dimensional spatial location and outputs information about the three dimensional spatial location calculated from information detected by the respective sensors to the steering controller 151. The sensors may include a GPS sensor for detecting a two dimensional plane location and an atmospheric pressure sensor for detecting an altitude, for example. The location detection unit 154 calculates the three dimensional spatial location of the mobile object 150 by using these sensors. The GPS sensor may be used as a sensor for detecting an altitude.

The steering mechanism 155 is a mechanism for the occupant to instruct the mobile object 150 to steer. Specifically, the steering mechanism 155 is configured by movable mechanisms, such as a steering wheel, an accelerator pedal, a brake pedal, a blinker lever, a wiper lever, and a light switch. Whenever the occupant issues an instruction by operating the steering mechanism 155, the steering instruction information is output to the driving mechanism 156.

The driving mechanism 156 drives not-shown mechanisms (movable mechanisms such as front wheels, an engine, and headlamps, and notification mechanisms such as blinker lamps, brake lamps, and a horn) in the mobile object 150 in accordance with the steering instruction information output from the steering mechanism 155. Specifically, when the steering angle of the steering wheel is output as the steering instruction information from the steering mechanism 155, the driving mechanism 156 transmits the steering instruction information to an actuator that controls a traveling direction of the mobile object 150, and changes the direction of the front wheels. When a treading degree of the accelerator pedal is output as the steering instruction information from the steering mechanism 155, the driving mechanism 156 transmits the steering instruction information to the actuator for controlling the acceleration of the mobile object 150 to increase rpm of the engine. In addition, a lamp switch operation, a blinker lever operation, a brake pedal treading, a horn operation, etc. may be output as the steering instruction information from the steering mechanism 155. In this case, the driving mechanism 156 notifies others by light by lighting the headlamps, the blinker lamps, or the brake lamps, or notifies others by sound by sounding the horn according the steering instruction information.

The steering communication unit 157 communicates with the communication unit 118 based on a communication scheme defined by a standard, for example, a wireless LAN.

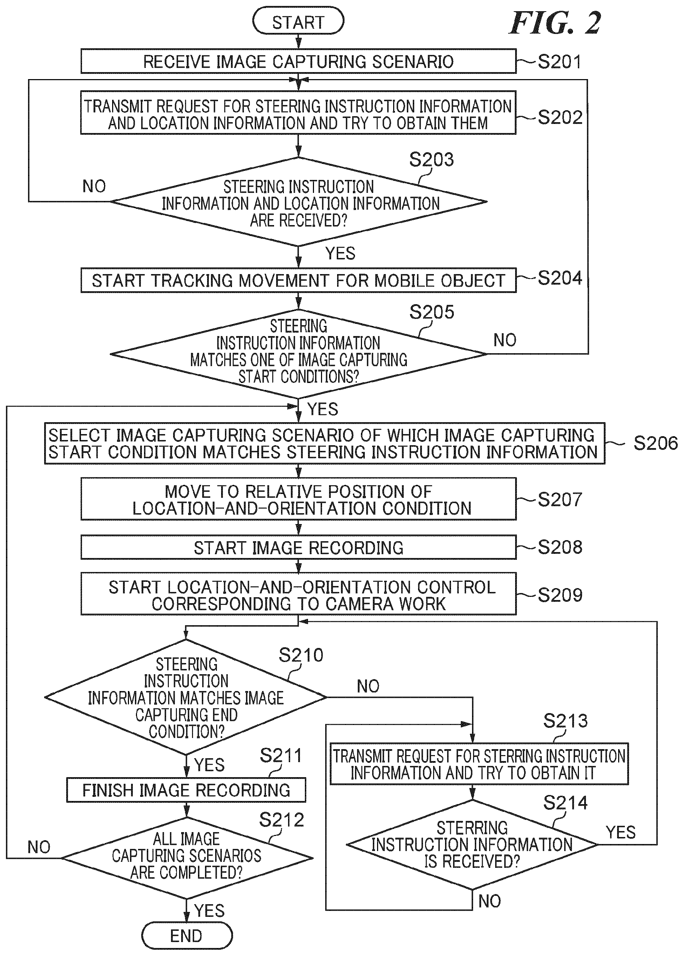

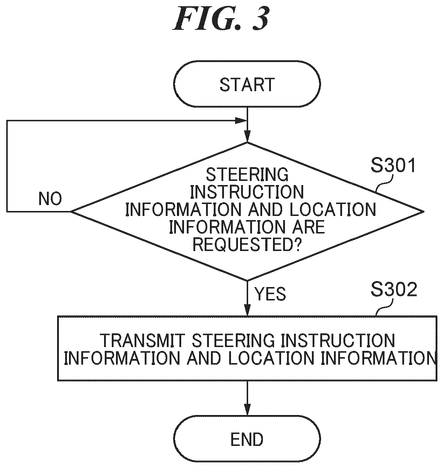

Next, the operation processes of the mobile image capturing apparatus 100 and the mobile object 150 executed when the mobile image capturing apparatus 100 captures an image of the mobile object 150 will be described in detail with reference to flowcharts in FIG. 2 and FIG. 3. FIG. 2 shows the flowchart of the operation process of the mobile image capturing apparatus 100, and FIG. 3 shows the flowchart of the operation process of the mobile object 150. That is, the operation process in FIG. 2 is executed by the controller 111 included in the moving apparatus 110 developing the program stored in the ROM 112 to the RAM 113 and running it. On the other hand, the operation process in FIG. 3 is executed by the steering controller 151 included in the mobile object 150 developing the program stored in the ROM 152 to the RAM 153 and running it.

In FIG. 2, the controller 111 first receives the image capturing scenario list from an information processing apparatus (not shown) via the communication unit 118 and records it in the image capturing scenario list storage unit 116 in a step S201. If the image capturing scenario list is recorded in advance in the image capturing scenario list storage unit 116, the step S201 is skipped and the process proceeds to a step S202.

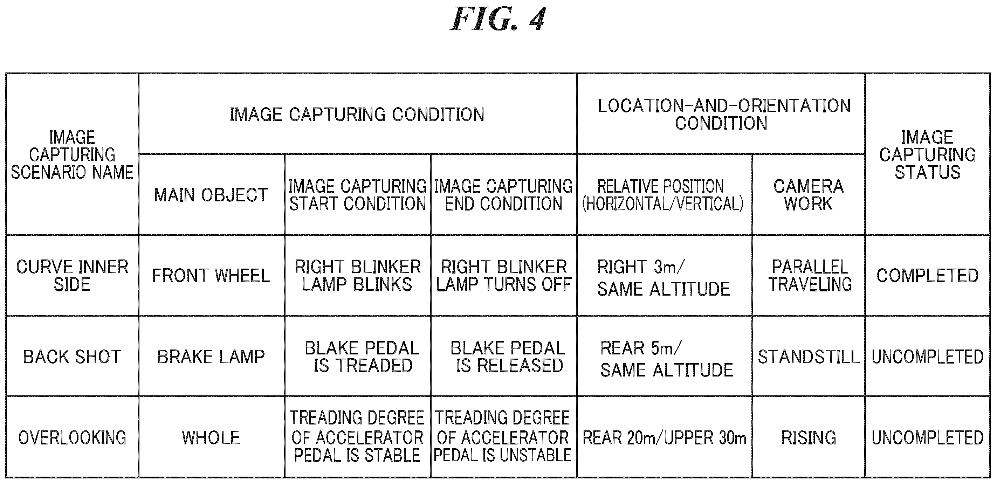

The image capturing scenario list will now be described with reference to FIG. 4. The image capturing scenario list describes a plurality of image capturing scenarios each of which includes an image capturing condition of the image capturing apparatus 130 and a location-and-orientation condition of the moving apparatus 110. The mobile image capturing apparatus 100 performs the image capturing in accordance with the image capturing condition and the location-and-orientation condition described in the image capturing scenario selected.

In the example in FIG. 4, a main object, an image capturing start condition, and an image capturing end condition are described in the image capturing scenario as the image capturing conditions. As the location-and-orientation condition, a relative position between the mobile image capturing apparatus 100 and the mobile object 150 and a camera work, which are conditions related to the image capturing field angle, are described in the image capturing scenario. The relative position is a three dimensional relative position that defines not only a two dimensional planar relative position, such as a right side 3 m or a rear side 5 m with respect to the position of the mobile object 150, but also a relative position in a vertical direction, such as an upper 30 m with respect to the altitude of the mobile object 150. In the example in FIG. 4, the two dimensional planar relative position is described at the left side of the slash (/) and the relative position in the vertical direction is described at the right side. The condition that the relative position in the vertical direction is the "SAME" indicates that the altitudes of the mobile object 150 and the mobile image capturing apparatus 100 are identical. The image capturing scenarios shown in FIG. 4 are examples, and this is not limiting. For example, the main object may not be included in the image capturing conditions.

Next, specific contents of the image capturing condition and the location-and-orientation condition described in the image capturing scenario will be described with reference to FIG. 4. In the example of the image capturing scenario of which the image capturing scenario name is "CURVE INNER SIDE" in FIG. 4, when the right blinker lamp of the mobile object 150 is blinked, the image capturing apparatus 130 starts the image capturing of the field angle including the main object (a front wheel of the mobile object 150 in this example). The mobile image capturing apparatus 100 performs the image capturing while traveling in parallel to the mobile object 150 at the right side 3 m away from the mobile object 150 and at the same altitude as the mobile object 150. Thereafter, when the right blinker lamp of the mobile object 150 is turned off, the image capturing apparatus 130 ends the image capturing. The above is the contents of the image capturing scenario of which the name is "CURVE INNER SIDE", and the mobile image capturing apparatus 100 operates with the aim of capturing a moving image with such contents in accordance with the steering instruction information.

In the step S202 in FIG. 2, the controller 111 sends a request for the steering instruction information and the location information to the mobile object 150 via the communication unit 118 and tries to obtain these pieces of information from the mobile object 150.

The operational process of the mobile object 150 will now be described with reference to the flowchart in FIG. 3.

In a step S301 in FIG. 3, the steering controller 151 determines whether the request for the steering instruction information and the location information is received from the mobile image capturing apparatus 100. The request for the steering instruction information and the location information is transmitted from the mobile image capturing apparatus 100 in the step S202 in FIG. 2. When the request for the steering instruction information and the location information is received (YES in the step S301), the process proceeds to a step S302. The steering controller 151 transmits the steering instruction information and the location information to the moving apparatus 110 via the steering communication unit 157 in the step S302, and finishes the process. On the other hand, when the request for the steering instruction information and the location information is not been received (NO in the step S301), the process of the step S301 is repeated until the request is received.

Referring back to FIG. 2, in a step S203, the controller 111 determines whether the steering instruction information and the location information are received from the mobile object 150. When the steering instruction information and the location information are received (YES in the step S203), the process proceeds to a step S204. On the other hand, when the steering instruction information and the location information are not received (NO in the step S203), the process is returned to the step S202 until these pieces of information are received.

In the step S204, the controller 111 instructs the image capturing apparatus 130 to start image capturing and then controls the moving mechanism 117 to move while tracking the mobile object 150. For this tracking movement, a known tracking movement method is used in accordance with the position-and-orientation information detected by the location-and-orientation detection unit 114 and the object recognition based on the moving image data generated by the image processor 115, and thus a detailed description thereof will be omitted.

In a step S205, the controller 111 determines whether the steering instruction information received in the step S202 matches any one of the image capturing start conditions of the image capturing scenarios in the image capturing scenario list recorded in the image capturing scenario list storage unit 116. When the steering instruction information matches the image capturing start condition of one of the image capturing scenarios in the image capturing scenario list (YES in the step S205), the process proceeds to a step S206. On the other hand, when the steering instruction information does not match the image capturing start conditions of any of the image capturing scenarios in the image capturing scenario list (NO in the step S205), the process returns to the step S202. Thereafter, the obtainment of the steering instruction information is repeated until the steering instruction information matches the image capturing start condition of any one of the image capturing scenarios in the image capturing scenario list.

In a step S206, the controller 111 (an image capturing scenario selection unit) selects the matched image capturing scenario as the image capturing scenario to be used for the image capturing from now.

In a step S207, the controller 111 controls the location and orientation of the moving apparatus 110 by controlling the moving mechanism 117 so that the location and orientation match the location-and-orientation condition of the image capturing scenario selected in the step S206. Specifically, the controller 111 drives the moving mechanism unit 117 to be at the relative position described in the selected image capturing scenario according to the location information of the mobile object 150, the information detected by the location-and-orientation detection unit 114, and the object tracking result.

When determining that the mobile image capturing apparatus 100 reaches the position and orientation matching the location-and-orientation condition described in the image capturing scenario selected in the step S206, the controller 111 instructs the image capturing apparatus 130 to start recording the moving image in a step S208. Thus, in the image capturing apparatus 130, the image processor 134 generates the moving image data from the digital image data sequentially stored in the RAM 113 in time series, and the image recording unit 135 starts recording the moving image data.

In a step S209, the controller 111 starts the location-and-orientation control for the mobile image capturing apparatus 100 in accordance with the camera work described in the image capturing scenario selected in the step S206. Note that the image capturing (image recording) in the image capturing apparatus 130 started in the step S208 continues until the process proceeds to a step S211 described later.

In a step S210, the controller 111 determines whether the image capturing end condition described in the image capturing scenario selected in the step S206 matches the steering instruction information most recently received from the mobile object 150. Here, since the steering instruction information most recently received by the controller 111 matches the image capturing start condition and does not match the image capturing end condition, it is necessary to newly obtain the steering instruction information from the mobile object 150.

When the steering instruction information does not match the image capturing end condition (NO in the step S210), the controller 111 in the moving apparatus 110 proceeds with the process to a step S213. In the step S213, the controller 111 transmits a request for the steering instruction information to the mobile object 150 via the communication unit 118 and tries to obtain the information.

Then, the controller 111 determines whether the steering instruction information is received from the mobile object 150 in a step S214. When the steering instruction information is received (YES in the step S214 in FIG. 2), the process returns to the step S210 in FIG. 2. On the other hand, when the steering instruction information is not received (NO in the step S214 in FIG. 2), the process returns to the step S213 in FIG. 2.

On the other hand, when the re-obtained latest steering instruction information matches the image capturing end condition (YES in the step S210), the process proceeds to a step S211.

In the step S211, the controller 111 instructs the image capturing apparatus 130 to finish recording the moving image. Thus, in the image capturing apparatus 130, the generation of the moving image data by the image processor 134 and the recording of the moving image data by the image recording unit 135 are finished.

In a step S212, the controller 111 determines whether the image capturing operations according to all the image capturing scenarios listed in the image capturing scenario list are completed. When the image capturing operations according to not all the image capturing scenarios described in the image capturing scenario list are completed (NO in step S212), the process returns to the step S204, and the image capturing operation according to the image capturing scenario that is not completed is performed. On the other hand, when the image capturing operations according to all the image capturing scenarios described in the image capturing scenario list are completed (YES in the step S212), the process ends.

The operation processes of the mobile image capturing apparatus 100 and the mobile object 150 when the mobile image capturing apparatus 100 of this embodiment captures the image of the mobile object 150 have been described above.

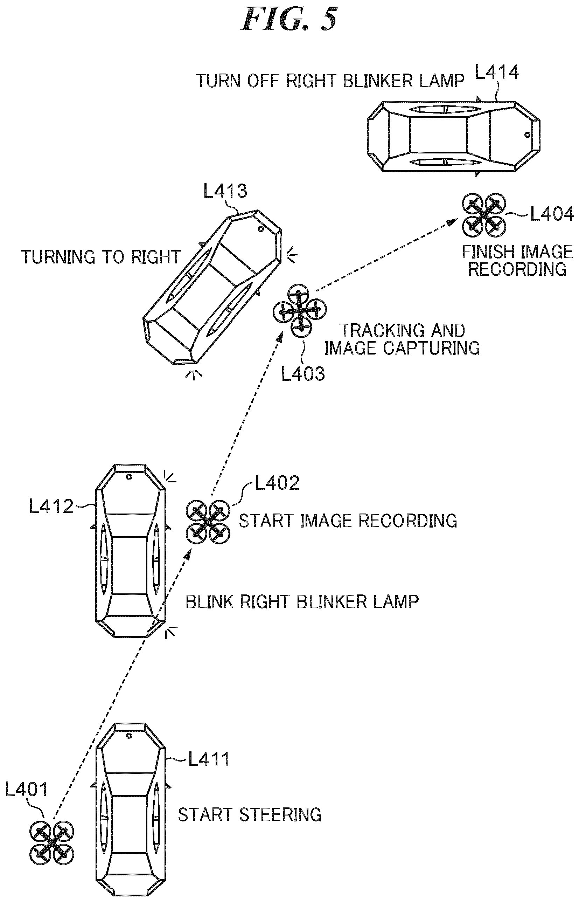

Next, a positional relationship between the mobile image capturing apparatus 100 and the mobile object 150 when the mobile image capturing apparatus 100 performs the image capturing operation according to the operation process in FIG. 2 will be specifically described with reference to FIG. 5.

The mobile object 150 is at a location L411 and the mobile image capturing apparatus 100 is at a location L401 at a start time. In the example in FIG. 5, at the start time, the location L401 of the mobile image capturing apparatus 100 is the same in altitude as the location L411 of the mobile object 150 at the left side of the mobile object 150. In the example in FIG. 5, the mobile image capturing apparatus 100 moves from the location L401 to locations L402, L403, and L404 with elapse of time, and the mobile object 150 moves from the location L411 to locations L412, L413, and L414 with elapse of time. In this example, the mobile object 150 blinks the right blinker lamp at the locations L412 and L413.

In the example in FIG. 5, the mobile image capturing apparatus 100 at the location L401 moves by tracking the mobile object 150 that starts steering while maintaining the same altitude at the left side of the mobile object 150 at the location L411 (the step S204). This tracking movement is continued until the steering instruction information transmitted from the mobile object 150 to the mobile image capturing apparatus 100 matches the image capturing start condition of any one of the image capturing scenarios in the image capturing scenario list.

Next, when the mobile unit 150 causes the right blinker lamp to blink, the mobile unit 150 transmits the steering instruction information "RIGHT BLINKER LAMP BLINKS" to the mobile the image capturing apparatus 100 in response to the request for the steering instruction information from the mobile the image capturing apparatus 100 (the step S202).

When receiving the steering instruction information "RIGHT BLINKER LAMP BLINKS" via the communication unit 118 (YES in the step S203), the controller 111 selects the image capturing scenario whose image capturing start condition matches the received steering instruction information (the steps S205 and S206). Specifically, the controller 111 selects the image capturing scenario "CURVE INNER SIDE" whose image capturing start condition matches the steering instruction information "RIGHT BLINKER LAMP BLINKS" from the image capturing scenario list shown in FIG. 4.

Next, the mobile image capturing apparatus 100 moves to the relative position of the location-and-orientation condition described in the selected image capturing scenario "CURVE INNER SIDE" (the step S207). Specifically, since the relative position of the location-and-orientation condition of the image capturing scenario "CURVE INNER SIDE" is "RIGHT 3m/SAME ALTITUDE", the mobile image capturing apparatus 100 moves from the position L401 to the position L402. That is, the mobile image capturing apparatus 100 at the location L402 is positioned at the same altitude as the mobile object 150 at the right 3m. Note that the mobile object 150 moves from the location L411 to the location L412 while blinking the right blinker lamp during this period.

When the mobile image capturing apparatus 100 reaches the location and orientation that match the location-and-orientation condition described in the selected image capturing scenario "CURVE INNER SIDE", the image capturing apparatus 130 starts recording the moving image (the step S208). Specifically, when the mobile image capturing apparatus 100 moves to the position L402 and the relative position with the mobile object 150 at the position L412 becomes "RIGHT 3 m/SAME ALTITUDE", the image capturing apparatus 130 starts recording the moving image.

The mobile image capturing apparatus 100 captures an image in accordance with the camera work described in the selected image capturing scenario "CURVE INNER SIDE" (the step S209). The camera work described in the selected image capturing scenario "CURVE INNER SIDE" is "PARALLEL TRAVELING". Therefore, the mobile image capturing apparatus 100 tracks and captures the image while moving from the location L412 to the location L413 so as to travel in parallel with the mobile object 150 that turns right from the location L402 to the location L403. This tracking image capturing is continued until the steering instruction information matches the image capturing end condition described in the image capturing scenario in the step S210 in FIG. 2.

When the mobile object 150 turns off the right blinker lamp at the location L414, the controller 111 included in the mobile image capturing apparatus 100 at the location L404 receives the steering instruction information "RIGHT BLINKER LAMP TURNS OFF" from the mobile object 150 via the communication unit 118 (the step S214). Since the steering instruction information received at this time matches the image capturing end condition of the selected image capturing scenario "CURVE INNER SIDE" (YES in the step S210), the mobile image capturing apparatus 100 finishes recording the moving image (the step S211 in FIG. 2).

As shown in the example in FIG. 5, the mobile image capturing apparatus 100 can move to the location described in the image capturing scenario before the mobile object 150 starts turning right because of obtaining the steering instruction information of "RIGHT BLINKER LAMP BLINKS". Therefore, the mobile image capturing apparatus 100 can record the moving image of the mobile object 150 without delay from the start of the right turn, not from the middle of the right turn. In this way, the mobile image capturing apparatus 100 can perform the image capturing while immediately coping with the state of the object (the mobile object 150) that freely moves around and the degree of freedom of image capturing can be improved.

In the step S205 in FIG. 2, the image capturing start condition described in the image capturing scenario that has been already completed may match the steering instruction information. In such a case, the image capturing scenario that has been already completed may be controlled not to be selected as the image capturing scenario to be performed. This can prevent excessive image capturing of only a specific the image capturing scenario, and increase the probability of selecting an uncompleted image capturing scenario in which the same image capturing start condition is described. This control is executed in accordance with, for example, image capturing status information indicating whether an image capturing scenario has been completed, which is included in each image capturing scenario.

In the above embodiment, the information about the blinking and the turning-off of the right blinker lamp has been described as an example of the steering instruction information. However, the steering instruction information is not limited thereto. For example, when the image capturing scenario "BACK SHOT" shown in FIG. 4 is selected, the steering instruction information "BRAKE PEDAL IS TREADED" constitutes the image pickup start condition. In this case, when the received steering instruction information matches the image capturing start condition, the mobile image capturing apparatus 100 moves to the same altitude behind the mobile object 150, and the lighted brake lamp is captured.

For example, when the image capturing scenario "overlooking" (a bird's eye view) shown in FIG. 4 is selected, the steering instruction information "TREADING DEGREE OF ACCELERATOR PEDAL IS STABLE" constitutes the image capturing start condition. In this case, when the received steering instruction information matches the image capturing start condition, the mobile image capturing apparatus 100 moves to the sky above the mobile object 150, and the surrounding scenery and the mobile object 150 are captured in an overlooking composition. When such the overlooking composition is captured, a highly aesthetical moving image can be obtained by capturing the mobile object 150 in a composition including a beautiful scenery or a landmark such as a symbolic building.

Therefore, the controller 111 (an object information obtaining unit) may obtain location information about an object, such as a landmark, around the mobile object 150 from an information processing apparatus (not shown) and start image capturing at the time when the landmark is included in the field angle of the image capturing apparatus 130. Specifically, the image capturing start condition of the image capturing scenario "OVERLOOKING" in FIG. 4 includes not only "TREADING DEGREE OF ACCELERATOR PEDAL IS STABLE" but also "a landmark is present around the mobile object 150". That is, in this case, not only "TREADING DEGREE OF ACCELERATOR PEDAL IS STABLE" but also "LANDMARK AND MOBILE OBJECT FALL WITHIN FIELD ANGLE" constitute the image capturing start condition of the image capturing scenario "OVERLOOKING". In the step S205 in FIG. 2, when the controller 111 determines that the received steering instruction information and the obtained location information about the landmark match the image capturing start condition of the image capturing scenario "OVERLOOKING", the controller 111 starts image capturing according to the image capturing scenario "OVERLOOKING".

Although the image capturing is started when it is determined in the step S205 in FIG. 2 that the image capturing start condition described in the image capturing scenario matches the steering instruction information in the above embodiment, the image capturing start condition is not limited thereto. For example, even if the image capturing start condition described in the image capturing scenario matches the steering instruction information, when the mobile object 150 moves fast and the mobile image capturing apparatus 100 cannot catch up, the image capturing need not be started. That is, when the image capturing start condition described in the image capturing scenario matches the steering instruction information, information of the traveling speed may be obtained as the steering instruction information from the mobile object 150, and the image capturing may be started when the traveling speed is equal to or lower than a predetermined speed.

In the above embodiment, the example in which the tracking image capturing is performed while maintaining the relative position described in the selected image capturing scenario has been described, but the method of the tracking image capturing is not limited thereto. For example, if there is an obstacle and it is impossible to maintain the relative position, the tracking image capturing may be performed so as to temporarily stop maintaining the relative position, avoid the obstacle, and then maintain the relative position again.

The mobile image capturing apparatus 100 detects an obstacle based on information detected by the location-and-orientation detection unit 114 included in the mobile image capturing apparatus 100. The mobile image capturing apparatus 100 may detect an obstacle by receiving the location information of the obstacle from an information processing apparatus (not shown) via the communication unit 118. When an obstacle is moving, the location information varies constantly, and therefore, the obstacle may be detected by receiving the location information about the obstacle or receiving predicted location information obtained by predicting the position in future as needed.

In the above embodiment, the example in which the controller 111 included in the moving apparatus 110 instructs the selection of the image capturing scenario and the start and end of the moving image recording according to the steering instruction information has been described. However, the selection of the image capturing scenario or the start and end instruction of the moving image recording is not limited thereto. For example, a server (not shown) may coordinate the moving apparatus 110, the image capturing apparatus 130, and the mobile object 150, and the server may select the image capturing scenario according to the steering instruction information or may issue an instruction to start or end the moving image recording. Although the example in which the controller 111 included in the moving apparatus 110 controls the image capturing apparatus 130 has been described in the above embodiment, this is not limiting. For example, the image capturing apparatus 130 may also include a controller separately from the controller 111 included in the moving apparatus 110 and the operation of the blocks of the image capturing apparatus 130 may be controlled.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

## Claims

1. An information processing apparatus (111) controlling a mobile image capturing apparatus (100) equipped with an image capturing apparatus (130), the information processing apparatus comprising:
a steering instruction information obtaining unit (111, S202) configured to obtain steering instruction information about a mobile object (150) with steering;
an image capturing control unit (111) configured to control image capturing by the image capturing apparatus (130);
a location-and-orientation control unit (111) configured to control a location and an orientation of the mobile image capturing apparatus (100) by driving the mobile image capturing apparatus (100) based on the steering instruction information;
an image capturing scenario list obtaining and holding unit (116) configured to obtain and hold an image capturing scenario list including a plurality of image capturing scenarios in which conditions related to image capturing by the image capturing apparatus (130) are described; and
an image capturing scenario selection unit (111, S206) configured to select one of the plurality of the image capturing scenarios in accordance with the steering instruction information,
wherein an image capturing start condition of the image capturing apparatus (130) and a location-and-orientation condition of the mobile image capturing apparatus (100) are described in each of the plurality of image capturing scenarios,
**characterized in that**
the image capturing scenario selection unit (111, S206) selects an image capturing scenario of which the image capturing start condition matches the steering instruction information obtained by the steering instruction information obtaining unit (111) from among the plurality of image capturing scenarios.

2. The information processing apparatus according to claim 1, wherein each of the plurality of image capturing scenarios includes image capturing status information indicating whether an image capturing operation according to the image capturing scenario is completed or uncompleted, and
wherein the image capturing scenario selection unit (111, S206) does not select an image capturing scenario from among the plurality of image capturing scenarios of which the image capturing status information indicates that the image capturing operation in accordance with the image capturing scenario is completed even if the image capturing start condition of the image capturing scenario matches the steering instruction information obtained by the steering instruction information obtaining unit (111).

3. The information processing apparatus according to claim 1, further comprising an object information obtaining unit (111) configured to obtain location information about an object around the mobile object (150),
wherein the image capturing scenario selection unit (111, S206) selects an image capturing scenario from among the plurality of image capturing scenarios of which the image capturing start condition matches the steering instruction information obtained by the steering instruction information obtaining unit (111) and the location information obtained by the object information obtaining unit (111).

4. The information processing apparatus according to any one of claims 1 to 3, wherein the location-and-orientation condition includes a relative position between the mobile image capturing apparatus (100) and the mobile object (150), and
wherein the image capturing apparatus (130) starts recording a moving image in a case where the location and orientation of the mobile image capturing apparatus (100) controlled by the location-and-orientation control unit (111) matches the relative position described in the image capturing scenario selected by the image capturing scenario selection unit (111, S206).

5. The information processing apparatus according to claim 4, wherein the location-and-orientation condition further includes a camera work of the image capturing apparatus (130), and
wherein the location-and-orientation control unit (111) controls the location and orientation of the mobile image capturing apparatus (100) in accordance with the camera work described in the image capturing scenario selected by the image capturing scenario selection unit (111, S206) while the moving image is recorded by the image capturing apparatus (130).

6. The information processing apparatus according to claim 4 or 5, wherein each of the plurality of the image capturing scenarios further includes an image capturing end condition of the image capturing apparatus, and
wherein the image capturing apparatus finishes recording the moving image in a case where the steering instruction information matches the image capturing end condition described in the image capturing scenario selected by the image capturing scenario selection unit (111, S206).

7. The information processing apparatus according to any one of claims 4 to 6, wherein each of the plurality of the image capturing scenarios further includes a main object to be captured by the image capturing apparatus (130), and
wherein the location-and-orientation control unit (111) controls the location and orientation of the mobile image capturing apparatus (100) so that the main object described in the image capturing scenario selected by the image capturing scenario selection unit (111, S206) will be included in a field angle of the image capturing apparatus (130) while the moving image is recorded by the image capturing apparatus (130).

8. The information processing apparatus according to any one of claims 1 to 7, further comprising a location information obtaining unit (111) configured to obtain location information about the mobile object,
wherein the steering instruction information obtaining unit (111) repeats to obtain the steering instruction information until one image capturing start condition of the plurality of the image capturing scenarios matches the steering instruction information, and the location-and-orientation control unit (111) performs tracking movement of the mobile object (150) based on the location information.

9. The information processing apparatus according to any one of claims 1 to 8, wherein the information processing apparatus is included in the mobile image capturing apparatus (100), the mobile object (150), or a server that is communicable with the mobile image capturing apparatus (100) and the mobile object (150).

10. An information processing system including the mobile image capturing apparatus (100), the mobile object (150) and the information processing apparatus according to any one of claims 1 to 9.

11. A control method for an information processing apparatus that controls a mobile image capturing apparatus (100) equipped with an image capturing apparatus (130), the control method comprising:
a steering instruction information obtaining step (S202) of obtaining steering instruction information about a mobile object (150) with steering;
an image capturing control step (S208) of controlling image capturing by the image capturing apparatus;
a location-and-orientation control step (S209) of controlling a location and orientation of the mobile image capturing apparatus (100) by driving the mobile image capturing apparatus (100) based on the steering instruction information;
an image capturing scenario list obtaining and holding step of obtaining and holding an image capturing scenario list including a plurality of image capturing scenarios in which conditions related to image capturing by the image capturing apparatus (130) are described; and
an image capturing scenario selection step of selecting one of the plurality of the image capturing scenarios in accordance with the steering instruction information,
wherein an image capturing start condition of the image capturing apparatus (130) and a location-and-orientation condition of the mobile image capturing apparatus (100) are described in each of the plurality of image capturing scenarios,
**characterized in that**
in the image capturing scenario selection step, an image capturing scenario of which the image capturing start condition matches the steering instruction information obtained in the steering instruction information obtaining step is selected from among the plurality of image capturing scenarios.

12. A computer program product including a program for causing a computer to function as each of the units of the information processing apparatus according to any one of claims 1 to 10.

## Patentansprüche

1. Informationsverarbeitungsvorrichtung (111), die eine mobile Bildaufnahmevorrichtung (100) steuert, die mit einer Bildaufnahmevorrichtung (130) ausgerüstet ist, wobei die Informationsverarbeitungsvorrichtung umfasst:
eine Lenkanweisungsinformationserhalteeinheit (111, S202), die zum Erhalten von Lenkanweisungsinformationen über ein mobiles Objekt (150) mit Lenkung eingerichtet ist,
eine Bildaufnahmesteuereinheit (111), die zum Steuern einer Bildaufnahme durch die Bildaufnahmevorrichtung (130) eingerichtet ist,
eine Ort-und-Orientierungssteuereinheit (111), die zum Steuern von Ort und Orientierung der mobilen Bildaufnahmevorrichtung (100) durch Ansteuern der mobilen Bildaufnahmevorrichtung (100) beruhend auf den Lenkanweisungsinformationen eingerichtet ist,
eine Bildaufnahmeszenariolistenerhalte- und Speichereinheit (116), die zum Erhalten und Speichern einer Bildaufnahmeszenarioliste eingerichtet ist, die eine Vielzahl von Bildaufnahmeszenarien enthält, in denen auf eine Bildaufnahme durch die Bildaufnahmevorrichtung (130) bezogene Bedingungen beschrieben sind, und
eine Bildaufnahmeszenarioauswahleinheit (111, S206), die zum Auswählen eines der Vielzahl der Bildaufnahmeszenarien gemäß den Lenkanweisungsinformationen eingerichtet ist,
wobei in jedem der Vielzahl der Bildaufnahmeszenarien eine Bildaufnahmestartbedingung der Bildaufnahmevorrichtung (130) und eine Ort-und-Orientierungsbedingung der mobilen Bildaufnahmevorrichtung (100) beschrieben sind,
**dadurch gekennzeichnet, dass**
die Bildaufnahmeszenarioauswahleinheit (111, S206) ein Bildaufnahmeszenario aus der Vielzahl der Bildaufnahmeszenarien auswählt, dessen Bildaufnahmestartbedingung mit den durch die Lenkanweisungsinformationserhalteeinheit (111) erhaltenen Lenkanweisungsinformationen zusammenpasst.

2. Informationsverarbeitungsvorrichtung nach Anspruch 1, wobei jedes der Vielzahl der Bildaufnahmeszenarien Bildaufnahmestatusinformationen enthält, die angeben, ob ein Bildaufnahmevorgang gemäß dem Bildaufnahmeszenario abgeschlossen oder nicht abgeschlossen ist, und
wobei die Bildaufnahmeszenarioauswahleinheit (111, S206) kein Bildaufnahmeszenario aus der Vielzahl der Bildaufnahmeszenarien auswählt, dessen Bildaufnahmestatusinformationen angeben, dass der Bildaufnahmevorgang gemäß dem Bildaufnahmeszenario abgeschlossen ist, selbst wenn die Bildaufnahmestartbedingung des Bildaufnahmeszenarios mit den durch die Lenkanweisungsinformationserhalteeinheit (111) erhaltenen Lenkanweisungsinformationen zusammenpasst.

3. Informationsverarbeitungsvorrichtung nach Anspruch 1, ferner mit einer Objektinformationserhalteeinheit (111), die zum Erhalten von Ortsinformationen über ein Objekt um das mobile Objekt (150) eingerichtet ist,
wobei die Bildaufnahmeszenarioauswahleinheit (111, S206) ein Bildaufnahmeszenario aus der Vielzahl der Bildaufnahmeszenarien auswählt, dessen Bildaufnahmestartbedingung mit den durch die Lenkanweisungsinformationserhalteeinheit (111) erhaltenen Lenkanweisungsinformationen und den durch die Objektinformationserhalteeinheit (111) erhaltenen Ortsinformationen zusammenpasst.

4. Informationsverarbeitungsvorrichtung nach einem der Ansprüche 1 bis 3, wobei die Ort-und-Orientierungsbedingung eine relative Position zwischen der mobilen Bildaufnahmevorrichtung (100) und dem mobilen Objekt (150) enthält, und
wobei die Bildaufnahmevorrichtung (130) ein Aufzeichnen eines Bewegtbildes in einem Fall startet, in dem der Ort und die Orientierung der mobilen Bildaufnahmevorrichtung (100), die durch die Ort-und-Orientierungssteuereinheit (111) gesteuert werden, mit der relativen Position zusammenpassen, die in dem durch die Bildaufnahmeszenarioauswahleinheit (111, S206) ausgewählten Bildaufnahmeszenario beschrieben ist.

5. Informationsverarbeitungsvorrichtung nach Anspruch 4, wobei die Ort-und-Orientierungsbedingung ferner eine Kameraführung der Bildaufnahmevorrichtung (130) enthält, und
wobei die Ort-und-Orientierungssteuereinheit (111) den Ort und die Orientierung der mobilen Bildaufnahmevorrichtung (100) gemäß der Kameraführung steuert, die in dem durch die Bildaufnahmeszenarioauswahleinheit (111, S206) ausgewählten Bildaufnahmeszenario beschrieben ist, während das Bewegtbild durch die Bildaufnahmevorrichtung (130) aufgezeichnet wird.

6. Informationsverarbeitungsvorrichtung nach Anspruch 4 oder 5, wobei jedes der Vielzahl der Bildaufnahmeszenarien ferner eine Bildaufnahmeendebedingung der Bildaufnahmevorrichtung enthält, und
wobei die Bildaufnahmevorrichtung ein Aufzeichnen des Bewegtbildes in einem Fall beendet, in dem die Lenkanweisungsinformationen mit der Bildaufnahmeendebedingung zusammenpassen, die in dem durch die Bildaufnahmeszenarioauswahleinheit (111, S206) ausgewählten Bildaufnahmeszenario beschrieben ist.

7. Informationsverarbeitungsvorrichtung nach einem der Ansprüche 4 bis 6, wobei jedes der Vielzahl der Bildaufnahmeszenarien ferner ein durch die Bildaufnahmevorrichtung (130) aufzunehmendes Hauptobjekt enthält, und
wobei die Ort-und-Orientierungssteuereinheit (111) den Ort und die Orientierung der mobilen Bildaufnahmevorrichtung (100) derart steuert, dass das Hauptobjekt, das in dem durch die Bildaufnahmeszenarioauswahleinheit (111, S206) ausgewählten Bildaufnahmeszenario beschrieben ist, in einem Bildwinkel der Bildaufnahmevorrichtung (130) enthalten sein wird, während das Bewegtbild durch die Bildaufnahmevorrichtung (130) aufgezeichnet wird.

8. Informationsverarbeitungsvorrichtung nach einem der Ansprüche 1 bis 7, ferner mit einer Ortsinformationserhalteeinheit (111), die zum Erhalten von Ortsinformationen über das mobile Objekt eingerichtet ist,
wobei die Lenkanweisungsinformationserhalteeinheit (111) das Erhalten der Lenkanweisungsinformationen wiederholt, bis eine Bildaufnahmestartbedingung der Vielzahl der Bildaufnahmeszenarien mit den Lenkanweisungsinformationen zusammenpasst, und die Ort-und-Orientierungssteuereinheit (111) eine Verfolgungsbewegung des mobilen Objekts (150) beruhend auf den Ortsinformationen durchführt.

9. Informationsverarbeitungsvorrichtung nach einem der Ansprüche 1 bis 8, wobei die Informationsverarbeitungsvorrichtung in der mobilen Bildaufnahmevorrichtung (100), dem mobilen Objekt (150) oder einem Server enthalten ist, der zum Kommunizieren mit der mobilen Bildaufnahmevorrichtung (100) und dem mobilen Objekt (150) fähig ist.

10. Informationsverarbeitungssystem, das die mobile Bildaufnahmevorrichtung (100), das mobile Objekt (150) und die Informationsverarbeitungsvorrichtung nach einem der Ansprüche 1 bis 9 enthält.

11. Steuerverfahren für eine Informationsverarbeitungsvorrichtung, die eine mobile Bildaufnahmevorrichtung (100) steuert, die mit einer Bildaufnahmevorrichtung (130) ausgerüstet ist, wobei das Steuerverfahren umfasst:
einen Lenkanweisungsinformationserhalteschritt (S202) eines Erhaltens von Lenkanweisungsinformationen über ein mobiles Objekt (150) mit Lenkung,
einen Bildaufnahmesteuerschritt (S208) eines Steuerns einer Bildaufnahme durch die Bildaufnahmevorrichtung,
einen Ort-und-Orientierungssteuerschritt (S209) eines Steuerns von Ort und Orientierung der mobilen Bildaufnahmevorrichtung (100) durch Ansteuern der mobilen Bildaufnahmevorrichtung (100) beruhend auf den Lenkanweisungsinformationen,
einen Bildaufnahmeszenariolistenerhalte- und Speicherschritt eines Erhaltens und Speicherns einer Bildaufnahmeszenarioliste, die eine Vielzahl von Bildaufnahmeszenarien enthält, in denen auf eine Bildaufnahme durch die Bildaufnahmevorrichtung (130) bezogene Bedingungen beschrieben sind, und
einen Bildaufnahmeszenarioauswahlschritt eines Auswählens eines der Vielzahl der Bildaufnahmeszenarien gemäß den Lenkanweisungsinformationen,
wobei in jedem der Vielzahl der Bildaufnahmeszenarien eine Bildaufnahmestartbedingung der Bildaufnahmevorrichtung (130) und eine Ort-und-Orientierungsbedingung der mobilen Bildaufnahmevorrichtung (100) beschrieben sind,
**dadurch gekennzeichnet, dass**
in dem Bildaufnahmeszenarioauswahlschritt ein Bildaufnahmeszenario aus der Vielzahl der Bildaufnahmeszenarien ausgewählt wird, dessen Bildaufnahmestartbedingung mit den in dem Lenkanweisungsinformationserhalteschritt erhaltenen Lenkanweisungsinformationen zusammenpasst.

12. Computerprogrammprodukt, das ein Programm zum Veranlassen eines Computers zum Arbeiten als jede der Einheiten der Informationsverarbeitungsvorrichtung nach einem der Ansprüche 1 bis 10 enthält.

## Revendications

1. Appareil de traitement d'informations (111) commandant un appareil mobile de capture d'image (100) équipé d'un appareil de capture d'image (130), l'appareil de traitement d'informations comprenant :
une unité d'obtention d'informations d'instruction de direction (111, S202) configurée pour obtenir des informations d'instruction de direction sur un objet mobile (150) avec direction ;
une unité de commande de capture d'image (111) configurée pour commander la capture d'image par l'appareil de capture d'image (130) ;
une unité de commande de localisation et d'orientation (111) configurée pour commander une localisation et une orientation de l'appareil mobile de capture d'image (100) en pilotant l'appareil mobile de capture d'image (100) sur la base des informations d'instruction de direction ;
une unité d'obtention et de maintien de liste de scénarios de capture d'image (116) configurée pour obtenir et maintenir une liste de scénarios de capture d'image incluant une pluralité de scénarios de capture d'image dans lesquels les conditions liées à la capture d'image par l'appareil de capture d'image (130) sont décrites ; et
une unité de sélection de scénario de capture d'image (111, S206) configurée pour sélectionner l'un de la pluralité de scénarios de capture d'image conformément aux informations d'instruction de direction,
dans lequel une condition de démarrage de capture d'image de l'appareil de capture d'image (130) et une condition de localisation et d'orientation de l'appareil mobile de capture d'image (100) sont décrites dans chacun de la pluralité de scénarios de capture d'image,
**caractérisé en ce que**
l'unité de sélection de scénario de capture d'image (111, S206) sélectionne un scénario de capture d'image dont la condition de démarrage de capture d'image correspond aux informations d'instruction de direction obtenues par l'unité d'obtention d'informations d'instruction de direction (111) parmi la pluralité de scénarios de capture d'image.

2. Appareil de traitement d'informations selon la revendication 1, dans lequel chacun de la pluralité de scénarios de capture d'image inclut des informations d'état de capture d'image indiquant si une opération de capture d'image selon le scénario de capture d'image est terminée ou inachevée, et
dans lequel l'unité de sélection de scénario de capture d'image (111, S206) ne sélectionne pas un scénario de capture d'image parmi la pluralité de scénarios de capture d'image dont les informations d'état de capture d'image indiquent que l'opération de capture d'image conformément au scénario de capture d'image est terminée même si la condition de démarrage de capture d'image du scénario de capture d'image correspond aux informations d'instruction de direction obtenues par l'unité d'obtention d'informations d'instruction de direction (111).

3. Appareil de traitement d'informations selon la revendication 1, comprenant en outre une unité d'obtention d'informations d'objet (111) configurée pour obtenir des informations de localisation sur un objet autour de l'objet mobile (150),
dans lequel l'unité de sélection de scénario de capture d'image (111, S206) sélectionne un scénario de capture d'image parmi la pluralité de scénarios de capture d'image dont la condition de démarrage de capture d'image correspond aux informations d'instruction de direction obtenues par l'unité d'obtention d'informations d'instruction de direction (111) et aux informations de localisation obtenues par l'unité d'obtention d'informations d'objet (111).

4. Appareil de traitement d'informations selon l'une quelconque des revendications 1 à 3, dans lequel la condition de localisation et d'orientation inclut une position relative entre l'appareil mobile de capture d'image (100) et l'objet mobile (150), et
dans lequel l'appareil de capture d'image (130) commence à enregistrer une image en mouvement dans un cas où la localisation et l'orientation de l'appareil de capture d'image mobile (100) commandé par l'unité de commande de localisation et d'orientation (111) correspondent à la position relative décrite dans le scénario de capture d'image sélectionné par l'unité de sélection de scénario de capture d'image (111, S206).

5. Appareil de traitement d'informations selon la revendication 4, dans lequel la condition de localisation et d'orientation inclut en outre un travail de caméra de l'appareil de capture d'image (130), et
dans lequel l'unité de commande de localisation et d'orientation (111) commande la localisation et l'orientation de l'appareil mobile de capture d'image (100) conformément au travail de caméra décrit dans le scénario de capture d'image sélectionné par l'unité de sélection de scénario de capture d'image (111, S206) pendant que l'image en mouvement est enregistrée par l'appareil de capture d'image (130).

6. Appareil de traitement d'informations selon la revendication 4 ou 5, dans lequel chacun de la pluralité de scénarios de capture d'image inclut en outre une condition de fin de capture d'image de l'appareil de capture d'image, et
dans lequel l'appareil de capture d'image termine l'enregistrement de l'image en mouvement dans un cas où les informations d'instruction de direction correspondent à la condition de fin de capture d'image décrite dans le scénario de capture d'image sélectionné par l'unité de sélection de scénario de capture d'image (111, S206).

7. Appareil de traitement d'informations selon l'une quelconque des revendications 4 à 6, dans lequel chacun de la pluralité des scénarios de capture d'image inclut en outre un objet principal devant être capturé par l'appareil de capture d'image (130), et
dans lequel l'unité de commande de localisation et d'orientation (111) commande la localisation et l'orientation de l'appareil mobile de capture d'image (100) de sorte que l'objet principal décrit dans le scénario de capture d'image sélectionné par l'unité de sélection de scénario de capture d'image (111, S206) sera inclus dans un angle de champ de l'appareil de capture d'image (130) pendant que l'image en mouvement est enregistrée par l'appareil de capture d'image (130).

8. Appareil de traitement d'informations selon l'une quelconque des revendications 1 à 7, comprenant en outre une unité d'obtention d'informations de localisation (111) configurée pour obtenir des informations de localisation sur l'objet mobile,
dans lequel l'unité d'obtention d'informations d'instruction de direction (111) se répète pour obtenir les informations d'instruction de direction jusqu'à ce qu'une condition de démarrage de capture d'image de la pluralité de scénarios de capture d'image corresponde aux informations d'instruction de direction, et l'unité de commande de localisation et d'orientation (111) effectue un mouvement de suivi de l'objet mobile (150) sur la base des informations de localisation.

9. Appareil de traitement d'informations selon l'une quelconque des revendications 1 à 8, dans lequel l'appareil de traitement d'informations est inclus dans l'appareil mobile de capture d'image (100), l'objet mobile (150), ou un serveur qui peut communiquer avec l'appareil mobile de capture d'image (100) et l'objet mobile (150).

10. Système de traitement d'informations incluant l'appareil mobile de capture d'image (100), l'objet mobile (150) et l'appareil de traitement d'informations selon l'une quelconque des revendications 1 à 9.

11. Procédé de commande pour un appareil de traitement d'informations qui commande un appareil mobile de capture d'image (100) équipé d'un appareil de capture d'image (130), le procédé de commande comprenant :
une étape d'obtention d'informations d'instruction de direction (S202) consistant à obtenir des informations d'instruction de direction concernant un objet mobile (150) avec direction ;
une étape de commande de capture d'image (S208) consistant à commander une capture d'image par l'appareil de capture d'image ;
une étape de commande de localisation et d'orientation (S209) consistant à commander une localisation et une orientation de l'appareil mobile de capture d'image (100) par pilotage de l'appareil mobile de capture d'image (100) sur la base des informations d'instruction de direction ;
une étape d'obtention et de maintien de liste de scénarios de capture d'image consistant à obtenir et à maintenir une liste de scénarios de capture d'image incluant une pluralité de scénarios de capture d'image dans lesquels des conditions liées à la capture d'image par l'appareil de capture d'image (130) sont décrites ; et
une étape de sélection de scénario de capture d'image consistant à sélectionner l'un de la pluralité des scénarios de capture d'image conformément aux informations d'instruction de direction,
dans lequel une condition de démarrage de capture d'image de l'appareil de capture d'image (130) et une condition de localisation et d'orientation de l'appareil mobile de capture d'image (100) sont décrites dans chacun de la pluralité de scénarios de capture d'image,
**caractérisé en ce que**
dans l'étape de sélection de scénario de capture d'image, un scénario de capture d'image dont la condition de démarrage de capture d'image correspond aux informations d'instruction de direction obtenues dans l'étape d'obtention d'informations d'instruction de direction est sélectionné parmi la pluralité de scénarios de capture d'image.

12. Produit programme d'ordinateur incluant un programme pour amener un ordinateur à fonctionner comme chacune des unités de l'appareil de traitement d'informations selon l'une quelconque des revendications 1 à 10.
